# EUROPEAN PATENT APPLICATION

(11) **EP 4 661 250 A1**
(43) Date of publication of application: **10.12.2025**
(21) Application number: 23919921.9
(22) Date of filing: 06.12.2023
(51) Int. Cl.: H02J 50/80, B60L 5/00, B60L 53/12, B60M 7/00

(54) **CONTROL DEVICE**

(30) Priority: 31.01.2023 JP 2023012954
(71) Applicant: TOYOTA JIDOSHA KABUSHIKI KAISHA, Toyota-shi Aichi 471-8571 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP)
(74) Representative: Cabinet Beau de Loménie
(86) International application number: PCT/JP2023/043703
(87) International publication number: WO 2024/161786

(57) **Abstract**

In a wireless power transfer system that transfers power in a non-contact manner from a primary device included in a supply facility to a secondary device included in a traveling vehicle by using narrow area wireless communication and wide area wireless communication, a control device includes a processor configured to shift to a magnetic coupling check to confirm a magnetic coupling state between the primary device and the secondary device when an interruption time in which the wide area wireless communication is interrupted is equal to or less than a first threshold, and shift to a compatibility check to confirm that the primary device and the secondary device are compatible when the interruption time is greater than the first threshold. As a result, the control device that is capable of promptly detecting an interruption of the wide area wireless communication and promptly resuming a process after ensuring the safety is provided.

## Description

### Field

The present disclosure relates to a control device.

### Background

Patent Literature 1 discloses that, in a non-contact feed system capable of transmitting information between a power transmitter and a power receiver by wireless communication, a communication unit that performs wireless communication switches a communication range between a wide communication range (wide area communication) and a narrow communication range (narrow area communication).

### Citation List

### Patent Literature

Patent Literature 1: Japanese Laid-open Patent Publication No. 2013-240132

### Summary

### Technical Problem

When power is supplied while a vehicle is traveling, it is necessary to exchange information such as a vehicle ID, required power, billing, vehicle specifications, and a vehicle position, and thus high-speed and large-capacity communication is needed. Therefore, it has been required to promptly detect an interruption of the wide area wireless communication during the power supply and promptly resume processing after ensuring safety.

The present disclosure has been made in view of the above, and an object of the present disclosure is to provide a control device capable of promptly detecting the interruption of the wide area wireless communication, and promptly resuming processing after ensuring safety.

### Solution to Problem

A control device according to the present disclosure in a wireless power transfer system that transfers power in a non-contact manner, using narrow area wireless communication and wide area wireless communication, from a primary device included in a supply facility to a secondary device included in a traveling vehicle, includes a processor to shift to a magnetic coupling check to confirm a magnetic coupling state between the primary device and the secondary device when an interruption time in which the wide area wireless communication is interrupted is equal to or less than a first threshold, and shift to a compatibility check to confirm that the primary device and the secondary device are compatible when the interruption time is greater than the first threshold.

### Advantageous Effects of Invention

According to the present disclosure, it is possible to promptly detect an interruption of wide area wireless communication and promptly resume processing after ensuring safety.

### Brief Description of Drawings

FIG. 1 is a schematic diagram illustrating a wireless power transfer system including a control device according to an embodiment.
FIG. 2 is a diagram illustrating an overall configuration of the wireless power transfer system.
FIG. 3 is a schematic diagram illustrating wide area wireless communication in the wireless power transfer system.
FIG. 4 is a block diagram illustrating a functional configuration of a power transmission ECU.
FIG. 5 is a block diagram illustrating a functional configuration of a vehicle ECU.
FIG. 6 is a diagram illustrating a power transfer process.
FIG. 7 is a sequence diagram illustrating a case where communication using wide area wireless communication is performed between a vehicle and a supply device.
FIG. 8 is a sequence diagram illustrating an operation after power supply from the supply device to the vehicle during traveling is terminated.
FIG. 9 is a flowchart illustrating a process executed by the control device.

### Description of Embodiments

A wireless power transfer system including a control device according to an embodiment of the present invention will be described below. Note that the present invention is not limited to the embodiment described below.

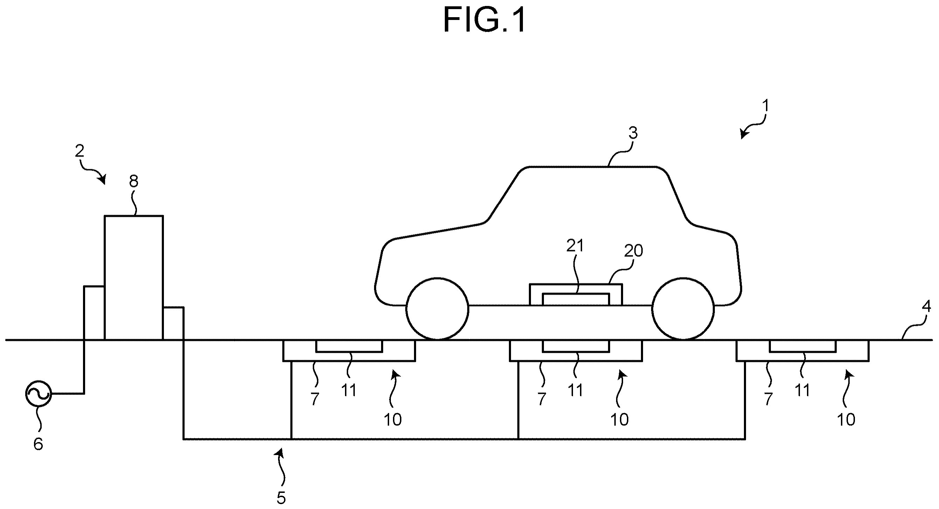

FIG. 1 is a schematic diagram illustrating the wireless power transfer system including the control device according to the embodiment. A wireless power transfer system 1 includes a supply facility 2 and a vehicle 3. The supply facility 2 is a facility that supplies power to the vehicle 3 in a non-contact manner while the vehicle 3 travels. The vehicle 3 is an electric vehicle that can be charged with electric power supplied from an external power source, and is, for example, a battery electric vehicle (BEV) or a plug-in hybrid electric vehicle (PHEV).

The wireless power transfer system 1 performs wireless power transfer from the supply facility 2 to the vehicle 3 by magnetic field resonance coupling (magnetic field resonance). The wireless power transfer system 1 transfers power from the supply facility 2 to the vehicle 3 in a non-contact manner while the vehicle 3 travels on a road 4. In other words, the wireless power transfer system 1 transfers power by a magnetic field resonance system, and realizes power supply to the vehicle 3 during traveling using magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The supply facility 2 includes a supply device 5 and an AC power source 6 that supplies power to the supply device 5. The supply device 5 transfers the power supplied from the AC power source 6 to the vehicle 3 in a non-contact manner. The AC power source 6 is, for example, a commercial power source. The supply device 5 includes a power transmitter 10 having a primary coil 11.

The supply device 5 includes a segment 7 including the primary coil 11 and a management device 8 that manages the segment 7. The segment 7 is embedded in a lane of the road 4. The management device 8 is installed beside the road 4. The segment 7 is electrically connected to the management device 8. The management device 8 is electrically connected to the AC power source 6, and supplies the power of the AC power source 6 to the segment 7. The segment 7 is electrically connected to the AC power source 6 via the management device 8. A plurality of the segments 7 can be arranged along the lane of the road 4. For example, as illustrated in FIG. 1, the supply device 5 includes three segments 7 aligned along the lane in the road 4, and one management device 8 connected to the three segments 7. The segment 7 has a function of transferring the power from the supply device 5 to the vehicle 3 in a non-contact manner. The management device 8 has a function of controlling wireless power transfer in the segment 7.

The vehicle 3 includes a power receiver 20 having a secondary coil 21. The power receiver 20 is provided on a bottom of a vehicle body of the vehicle 3. When the vehicle 3 travels on the road 4 in which the primary coil 11 is installed, the primary coil 11 on a ground side and the secondary coil 21 on a vehicle side face each other in a vertical direction. The wireless power transfer system 1 transfers power from the primary coil 11 of the power transmitter 10 to the secondary coil 21 of the power receiver 20 in a non-contact manner while the vehicle 3 is traveling on the road 4.

In the description, traveling means a state in which the vehicle 3 is located on the road 4 for traveling. The traveling includes a state in which the vehicle 3 is temporarily stopped on the road 4. For example, a state in which the vehicle 3 is stopped on the road 4 due to waiting for a traffic light is also included in traveling. On the other hand, for example, when the vehicle 3 is parked or stopped although the vehicle 3 is located on the road 4, this state is not included in traveling.

In addition, in the description, the lane in which the primary coil 11 (segment 7) is embedded may be referred to as a D-WPT lane, and a place that is a partial section of the road 4 and where wireless power transfer by the supply device 5 can be performed may be referred to as a D-WPT charging site. In the D-WPT lane and the D-WPT charging site, a plurality of the primary coils 11 (a plurality of the segments 7) is aligned in a traveling direction of the vehicle 3 over a predetermined section of the road 4.

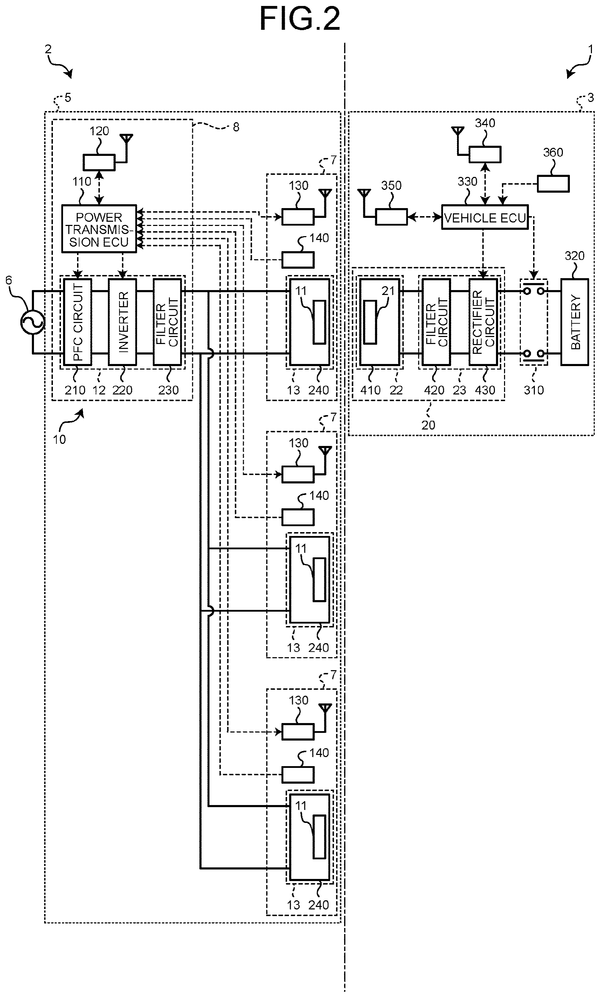

FIG. 2 is a diagram illustrating an overall configuration of the wireless power transfer system. In the supply facility 2, the supply device 5 and the AC power source 6 are electrically connected. In the supply device 5, the segment 7 and the management device 8 are electrically connected.

The supply device 5 includes a configuration provided in the management device 8 and a configuration provided in the segment 7. The supply device 5 includes the power transmitter 10, a power transmission electronic control unit (ECU) 110, a first communication device 120, a second communication device 130, and a foreign object detector 140.

The power transmitter 10 includes an electric circuit connected to the AC power source 6. The power transmitter 10 includes a power factor collection (PFC) circuit 210, an inverter (INV) 220, a filter circuit 230, and a transmission-side resonance circuit 240.

The PFC circuit 210 improves a power factor of the AC power input from the AC power source 6, converts the AC power into DC power, and outputs the DC power to the inverter 220. The PFC circuit 210 includes an AC/DC converter. The PFC circuit 210 is electrically connected to the AC power source 6.

The inverter 220 converts the DC power input from the PFC circuit 210 into AC power. Each switching element of the inverter 220 includes an insulated gate bipolar transistor (IGBT), a metal-oxide-semiconductor field effect transistor (MOSFET), or the like, and performs a switching operation according to a control signal from the power transmission ECU 110. For example, a driving frequency of the inverter 220 is 85 kHz. The inverter 220 outputs the converted AC power to the filter circuit 230.

The filter circuit 230 removes noise included in the AC current input from the inverter 220, and supplies the AC power from which the noise has been removed to the transmission-side resonance circuit 240. The filter circuit 230 is an LC filter in which a coil and a capacitor are combined. For example, the filter circuit 230 includes a T-type filter in which two coils and one capacitor are arranged in a T-shape. The PFC circuit 210, the inverter 220, and the filter circuit 230 configure a power converter 12 of the power transmitter 10.

The transmission-side resonance circuit 240 is a power transfer unit that transfers the AC power supplied from the filter circuit 230 to the power receiver 20 in a non-contact manner. When the AC power is supplied from the filter circuit 230 to the transmission-side resonance circuit 240, a current flows through the primary coil 11, and a magnetic field for power transfer is generated.

The transmission-side resonance circuit 240 includes the primary coil 11 and a resonance capacitor. The primary coil 11 is a power transfer coil. The resonance capacitor is connected in series to one end of the primary coil 11, and adjusts a resonance frequency of the transmission-side resonance circuit. The resonance frequency is 10 kHz to 100 GHz, preferably 85 kHz. For example, the power transmitter 10 is configured such that the resonance frequency of the transmission-side resonance circuit 240 and the driving frequency of the inverter 220 coincide with each other. The transmission-side resonance circuit 240 configures a primary device 13 of the power transmitter 10.

The power transmitter 10 includes the power converter 12 and the primary device 13. The power converter 12 includes the PFC circuit 210, the inverter 220, and the filter circuit 230. The primary device 13 includes the transmission-side resonance circuit 240. The power transmitter 10 has a configuration in which the power converter 12 is provided in the management device 8 and the primary device 13 is provided in the segment 7.

In the supply device 5, the power converter 12 of the power transmitter 10, the power transmission ECU 110, and the first communication device 210 are provided in the management device 8, and the primary device 13 of the power transmitter 10, the second communication device 130, and the foreign object detector 140 are provided in the segment 7.

The power transmission ECU 110 is an electronic control device that controls the supply device 5. The power transmission ECU 110 includes a processor and a memory. The processor includes a central processing unit (CPU), a digital signal processor (DSP), and a fieldprogrammable gate array (FPGA). The memory is a main storage device, and includes a random access memory (RAM) and a read only memory (ROM). The power transmission ECU 110 loads the program stored in a storage unit into a work area of the memory (main storage device), executes the program, and controls each component and the like through the execution of the program, thereby realizing a function matching a predetermined purpose. The storage unit includes a recording medium such as an erasable programmable ROM (EPROM), a hard disk drive (HDD), and a removable medium. Examples of the removable medium include a disk recording medium such as a universal serial bus (USB) memory, a compact disc (CD), a digital versatile disc (DVD), and a Blu-ray (registered trademark) disc (BD). The storage unit can store an operating system (OS), various programs, various tables, various databases, and the like. Signals from various sensors are input to the power transmission ECU 110. A signal from the foreign object detector 140 is input to the power transmission ECU 110. Then, the power transmission ECU 110 executes various controls based on signals input from various sensors.

For example, the power transmission ECU 110 executes power control for adjusting power to be transferred. In the power control, the power transmission ECU 110 controls the power transmitter 10. The power transmission ECU 110 outputs a control signal to the power converter 12 in order to control the power supplied from the power converter 12 to the primary device 13. The power transmission ECU 110 controls the switching elements included in the PFC circuit 210 to adjust the power to be transferred, and controls the switching elements included in the inverter 220 to adjust the power to be transferred.

Further, the power transmission ECU 110 executes communication control for controlling communication with the vehicle 3. In the communication control, the power transmission ECU 110 controls the first communication device 120 and the second communication device 130.

The first communication device 120 is a groundside communication device that performs wide area wireless communication. The first communication device 120 performs wireless communication with the vehicle 3 before approaching the WPT lane among the vehicles 3 traveling on the road 4. A state before approaching the WPT lane means that the vehicle 3 is at a position where narrow area wireless communication with the supply device 5 cannot be performed.

The wide area wireless communication is communication with a communication distance of 10 meters to 10 kilometers. The wide area wireless communication is communication having a longer communication distance than the narrow area wireless communication. As the wide area wireless communication, various types of wireless communication having a long communication distance can be used. For example, communication conforming to communication standards such as 3GPP (registered trademark), 4G formulated by IEEE, LTE, 5G, and WiMAX is used for the wide area wireless communication. In the wireless power transfer system 1, vehicle information associated with vehicle identification information (vehicle ID) is sent from the vehicle 3 to the supply device 5 using the wide area wireless communication.

The second communication device 130 is a groundside communication device that performs the narrow area wireless communication. The second communication device 130 performs wireless communication with the vehicle 3 approaching or entering the WPT lane among the vehicles 3 traveling on the road 4. The state of approaching the WPT lane means that the vehicle 3 is at a position where the narrow area wireless communication with the supply device 5 can be performed.

The narrow area wireless communication is communication with a communication distance of less than 10 meters. The narrow area wireless communication is communication having a shorter communication distance than the wide area wireless communication. As the narrow area wireless communication, various short-range wireless communication having a short communication distance can be used. For example, communication conforming to any communication standards formulated by IEEE, ISO, IEC, and the like is used for the narrow area wireless communication. As an example, Wi-Fi (registered trademark), Bluetooth (registered trademark), and ZigBee (registered trademark) are used for the narrow area wireless communication. Alternatively, as a technique for performing the narrow area wireless communication, radio frequency identification (RFID), dedicated short range communication (DSRC), and the like may be used. In the wireless power transfer system 1, vehicle identification information and the like are sent from the vehicle 3 to the supply device 5 by using the narrow area wireless communication.

The foreign object detector 140 detects a metal foreign object, a living object, and the like that are present above the primary coil 11. The foreign object detector 140 includes, for example, a sensor coil installed on the ground, an imaging device, and the like. The foreign object detector 140 exerts a foreign object detection (FOD) function and a living object protection (LOP) function in the wireless power transfer system 1.

In the supply device 5, the configuration of the power transmitter 10 is divided into the segment 7 and the management device 8, and three segments 7 are connected to one management device 8. The power transmitter 10 is configured such that one inverter supplies power to three transmission-side resonance circuits 240. In the supply device 5, a signal from each segment 7 is input to the management device 8. Signals from the second communication device 130 and the foreign object detector 14 provided in the first segment are input to the power transmission ECU 110. Similarly, signals from the second communication device 130 and the foreign object detector 14 provided in the second segment are input to the power transmission ECU 110. Signals from the second communication device 130 and the foreign object detector 14 provided in the third segment are input to the power transmission ECU 110. The power transmission ECU 110 can identify the state of each segment 7 based on the signal input from each segment 7.

The vehicle 3 includes the power receiver 20, a charging relay 310, a battery 320, a vehicle ECU 330, a third communication device 340, a fourth communication device 350, and a global positioning system (GPS) receiver 360.

The power receiver 20 supplies the power received from the power transmitter 10 to the battery 320. The power receiver 20 is electrically connected to the battery 320 via the charging relay 310. The power receiver 20 includes a reception-side resonance circuit 410, a filter circuit 420, and a rectifier circuit 430.

The reception-side resonance circuit 410 is a power reception unit that receives power transferred from the power transmitter 10 in a non-contact manner. The reception-side resonance circuit 410 includes a reception-side resonance circuit including the secondary coil 21 and a resonance capacitor. The secondary coil 21 is a power receiving coil that receives power transferred from the primary coil 11 in a non-contact manner. The resonance capacitor is connected in series to one end of the secondary coil 21, and adjusts a resonance frequency of the reception-side resonance circuit. The resonance frequency of the reception-side resonance circuit 410 is determined to match the resonance frequency of the transmission-side resonance circuit 240.

The resonance frequency of the reception-side resonance circuit 410 is the same as the resonance frequency of the transmission-side resonance circuit 240. Therefore, when a magnetic field is generated by the transmission-side resonance circuit 240 in a state where the reception-side resonance circuit 410 faces the transmission-side resonance circuit 240, vibration of the magnetic field is transmitted to the reception-side resonance circuit 410. The primary coil 11 and the secondary coil 21 are brought into a resonance state. When an induced current flows through the secondary coil 21 by electromagnetic induction, an induced electromotive force is generated in the reception-side resonance circuit 410. In this way, power transferred from the transmission-side resonance circuit 240 in a non-contact manner is received by the reception-side resonance circuit 410. Then, the reception-side resonance circuit 410 supplies the power received from the transmission-side resonance circuit 240 to the filter circuit 420. The reception-side resonance circuit 410 configures a secondary device 22 of the power receiver 20.

The filter circuit 420 removes noise included in AC current input from the reception-side resonance circuit 410, and outputs the AC power from which the noise has been removed to the rectifier circuit 430. The filter circuit 420 is an LC filter in which a coil and a capacitor are combined. For example, the filter circuit 420 includes a T-type filter in which two coils and one capacitor are arranged in a T-shape.

The rectifier circuit 430 converts the AC power input from the filter circuit 420 into DC power and outputs the DC power to the battery 320. The rectifier circuit 430 includes, for example, a full-bridge circuit in which four diodes are full-bridge connected as rectifier elements. A switching element is connected in parallel to each diode of the rectifier circuit 430. Each switching element of the rectifier circuit 430 is configured by the IGBT, and performs a switching operation according to a control signal from the vehicle ECU 330. The rectifier circuit 430 supplies the converted DC power to the battery 320. The filter circuit 420 and the rectifier circuit 430 configure the power converter 23 of the power receiver 20.

The power receiver 20 includes the secondary device 22 and the power converter 23. The secondary device 22 includes the reception-side resonance circuit 410. The power converter 23 includes the filter circuit 420 and the rectifier circuit 430.

The charging relay 310 is provided between the rectifier circuit 430 and the battery 320. An open/close state of the charging relay 310 is controlled by the vehicle ECU 330. The charging relay 310 is controlled to be in a closed state when the battery 320 is charged by the power transmitter 10. When the charging relay 310 is in the closed state, the rectifier circuit 430 and the battery 320 are connected in an energizable manner. When the charging relay 310 is in an open state, the rectifier circuit 430 and the battery 320 are disconnected from each other in a non-energizable manner. For example, when the charging relay 310 is in the open state, the vehicle 3 does not make a power-feeding request.

The battery 320 is a DC power source that can be charged, and includes, for example, a lithium ion battery or a nickel hydrogen battery. The battery 320 stores the power supplied from the power transmitter 10 to the power receiver 20. In addition, the battery 320 can supply power to a traveling motor of the vehicle 3. The battery 320 is electrically connected to the traveling motor via a power control unit (PCU). The PCU is a power converter that converts DC power of the battery 320 into AC power and supplies the AC power to the traveling motor. Each switching element of the PCU is configured by the IGBT, and performs a switching operation according to a control signal from the vehicle ECU 330.

The vehicle ECU 330 is an electronic control device that controls the vehicle 3. The vehicle ECU 330 has a hardware configuration similar to that of the power transmission ECU 110. Signals from various sensors mounted on the vehicle 3 are input to the vehicle ECU 330.

Further, a positioning signal received by a GPS receiver 360 is input to the vehicle ECU 330. The vehicle ECU 330 can acquire current position information of the vehicle 3 from the GPS receiver 360. Then, the vehicle ECU 330 executes various controls based on signals input from various sensors.

For example, the vehicle ECU 330 transfers power from the primary coil 11 to the secondary coil 21 in a non-contact manner, and executes non-contact charge control of storing the power received by the secondary coil 21 in the battery 320. In the non-contact charge control, the vehicle ECU 330 controls the rectifier circuit 430, the charging relay 310, the third communication device 340, and the fourth communication device 350. The non-contact charge control includes power control for controlling charging power and communication control for controlling communication with the supply device 5. In the power control, the vehicle ECU 330 controls a switching element included in the rectifier circuit 430 to adjust power (charging power) supplied from the power receiver 20 to the battery 320. In the communication control, the vehicle ECU 330 controls the third communication device 340 and the fourth communication device 350.

The third communication device 340 is a vehicleside communication device that performs the wide area wireless communication. The third communication device 340 performs wireless communication with the first communication device 120 of the supply device 5 in a state before the vehicle 3 traveling on the road 4 approaches the WPT lane. The wide area wireless communication is bidirectional wireless communication. Communication between the first communication device 120 and the third communication device 340 is performed by high-speed wireless communication.

The fourth communication device 350 is a vehicleside communication device that performs the narrow area wireless communication. The fourth communication device 350 performs wireless communication with the second communication device 130 of the supply device 5 in a state where the vehicle 3 has approached or entered the WPT lane. The narrow area wireless communication is unidirectional wireless signaling. The unidirectional wireless signaling is point to point signaling (P2PS). The P2PS is used to notify the vehicle identification information from the vehicle 3 to the supply device 5 in each activity of pairing, alignment check, magnetic coupling check, termination of power transfer, and termination of power transfer. In addition, the P2PS can be used as a means of alignment check in a lateral direction. The lateral direction is a width direction of the lane and is a width direction of the vehicle 3.

The GPS receiver 360 detects a current position of the vehicle 3 based on positioning information obtained from a plurality of positioning satellites. The current position information of the vehicle 3 detected by the GPS receiver 360 is sent to the vehicle ECU 330.

In the supply device 5, the filter circuit 230 may be included in the management device 8 instead of the segment 7. In other words, the filter 230 may be installed beside the road 4. In this case, the power converter 12 includes the PFC circuit 210, the inverter 220, and the filter circuit 230, and the primary device 23 includes the transmission-side resonance circuit 240.

In addition, the filter circuit 230 may be individually provided in the primary coil 11, or may be collectively provided in the plurality of primary coils 11.

Furthermore, the filter circuit 230 is not limited to the T-type filter, and may be, for example, a band pass filter in which a coil and a capacitor are connected in series. The same applies to the filter circuit 420 of the vehicle 3.

Further, in the power transmitter 10, a changeover switch for switching the primary coil 11 to be energized may be provided in each of the primary devices 13 when the inverter 220 is connected to the plurality of primary coils 11. The changeover switch may be provided in the management device 8 beside the road 4 or may be provided near the primary coil 11.

Further, the transmission-side resonance circuit 240 is not limited to the configuration in which the primary coil 11 and the resonance capacitor are connected in series. The primary coil 11 and the resonance capacitor may be connected in parallel, or may be connected in combination of parallel and series. In other words, the transmission-side resonance circuit 240 only needs to be configured such that the resonance frequency of the transmission-side resonance circuit 240 matches the driving frequency of the inverter 220, and a connection relationship among the components is not particularly limited. The same applies to the reception-side resonance circuit 410 of the vehicle 3.

Still more, the driving frequency of the inverter 220 is not limited to 85 kHz, and may be a frequency around 85 kHz. In other words, the driving frequency of the inverter 220 may be a predetermined frequency band including 85 kHz.

Still more, the power transmitter 10 may have a configuration in which a plurality of inverters 220 is connected to an output-side power line (DC power line) of the PFC circuit 210.

Still more, the foreign object detector 140 may be provided not only on the ground side but also on the vehicle 3 side. For example, when the foreign object detector on the vehicle 3 side detects a foreign object or a living object present above the primary coil 11, the power-feeding request can be stopped until the vehicle 3 passes the primary coil 11.

Still more, in the wireless power transfer system 1, information sent from the vehicle 3 to the supply device 5 using the narrow area wireless communication includes the power-feeding request, a feeding-power requirement, and the like in addition to the vehicle identification information. The power-feeding request is information indicating that power transfer from the primary coil 11 is requested. The feeding-power requirement is amount of power required to be transferred from the power supply device 5 to the vehicle 3. The vehicle ECU 330 can calculate the feeding-power requirement based on a state of charge (SOC) of the battery 320.

Further, the wireless power transfer system 1 is not limited to a method of feeding power from the ground to the vehicle 3, and can also realize a method of feeding power from the vehicle 3 to the ground. In this case, the rectifier circuit 430 can be replaced with an inverter to realize power supply and rectification at the time of receiving power.

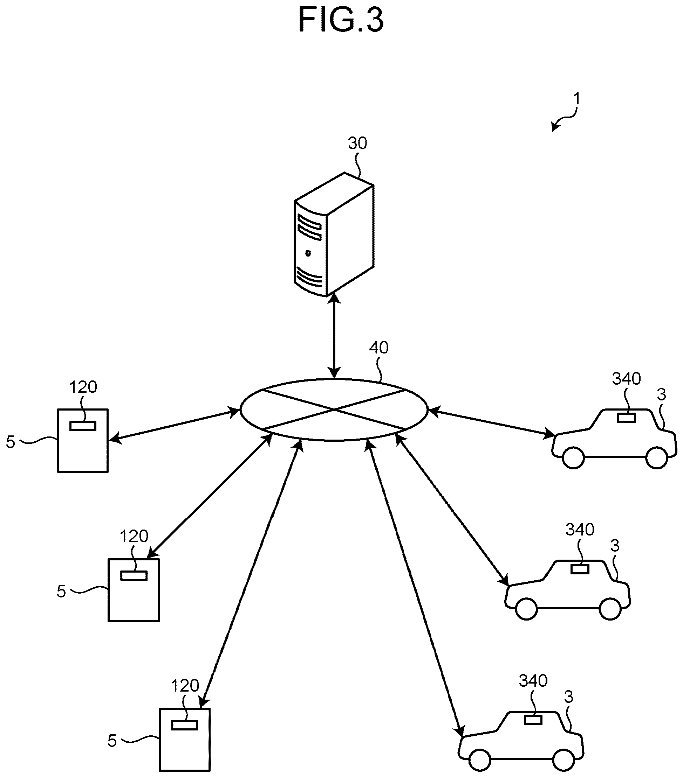

FIG. 3 is a schematic diagram illustrating the wide area wireless communication in the wireless power transfer system.

In the wireless power transfer system 1, the vehicle 3 can communicate with the server 30, and the supply device 5 can communicate with the server 30. The server 30 is connected to the network 40 and can communicate with a plurality of vehicles 3 and a plurality of supply devices 5 via the network 40. The network 40 includes a wide area network (WAN) that is a public communication network such as the Internet and a telephone communication network of a mobile phone.

The vehicle 3 is connected to the network 40 by the wide area wireless communication using the third communication device 340. The vehicle 3 sends information to the server 30 and receives information from the server 30.

The supply device 5 is connected to the network 40 by the wide area wireless communication using the first communication device 120. The supply device 5 sends information to the server 30 and receives information from the server 30.

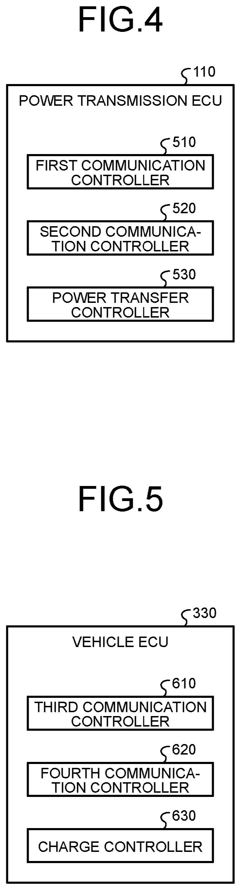

FIG. 4 is a block diagram illustrating a functional configuration of the power transmission ECU. The power transmission ECU 110 includes a first communication controller 510, a second communication controller 520, and a power transfer controller 530.

The first communication controller 510 executes first communication control for controlling the first communication device 120. The first communication control controls the wide area wireless communication on the supply device 5 side, and controls communication of the supply device 5 using the first communication device 120. In other words, the first communication control controls communication of the management device 8 of the supply device 5. The first communication control controls communication between the supply device 5 and the network 40 and also controls communication between the supply device 5 and the server 30 via the network 40. The first communication controller 510 is a supply equipment communication controller (SECC).

The second communication controller 520 executes second communication control for controlling the second communication device 130. The second communication control controls the narrow area wireless communication on the supply device 5 side, and controls communication of the supply device 5 using the second communication device 130. In other words, the second communication control controls communication of the segment 7 of the supply device 5. The second communication control controls communication between the supply device 5 and the vehicle 3 as communication not via the network 40. The second communication controller 520 is a primary device communication controller (PDCC).

The power transfer controller 530 executes power transfer control for controlling the power transmitter 10. The power transfer control controls the power to be transferred, and controls the power supply unit 12 of the power transmitter 10. The power transfer controller 530 executes power control for controlling the PFC circuit 210 and the inverter 220.

FIG. 5 is a block diagram illustrating a functional configuration of the vehicle ECU. The vehicle ECU 330 includes a third communication controller 610, a fourth communication controller 620, and a charge controller 630.

The third communication controller 610 executes third communication control for controlling the third communication device 340. The third communication control controls the wide area wireless communication on the vehicle 3 side, and controls communication of the vehicle 3 using the third communication device 340. The third communication control controls communication between the vehicle 3 and the network 40 and also controls communication between the vehicle 3 and the server 30 via the network 40. The third communication controller 610 is an EV communication controller (EVCC).

The fourth communication controller 620 executes fourth communication control for controlling the fourth communication device 350. The fourth communication control controls the narrow area wireless communication on the vehicle 3 side, and controls communication of the vehicle 3 using the fourth communication device 350. The fourth communication control controls communication between the vehicle 3 and the supply device 5 as communication not via the network 40. The fourth communication controller 620 is a secondary device communication controller (SDCC).

The charge controller 630 executes charge control for controlling the power receiver 20 and the charging relay 310. The charge control includes power control for controlling received power in the secondary device 20 and relay control for controlling a connection state between the secondary device 22 and the battery 320. The charge controller 630 executes power control for controlling the rectifier circuit 430. The charge controller 630 executes relay control for switching an open/close state of the charging relay 310.

In the wireless power transfer system 1 configured as described above, wireless power transfer from the supply device 5 to the vehicle 3 is performed in a state where wireless communication is established between the vehicle 3 and the supply device 5. In a state where the vehicle 3 and the supply device 5 are paired by wireless communication, power is transferred from the primary coil 11 on the ground side to the secondary coil 21 on the vehicle side in a non-contact manner. Then, in the vehicle 3, the charge control is performed to supply the power received by the secondary coil 21 to the battery 320.

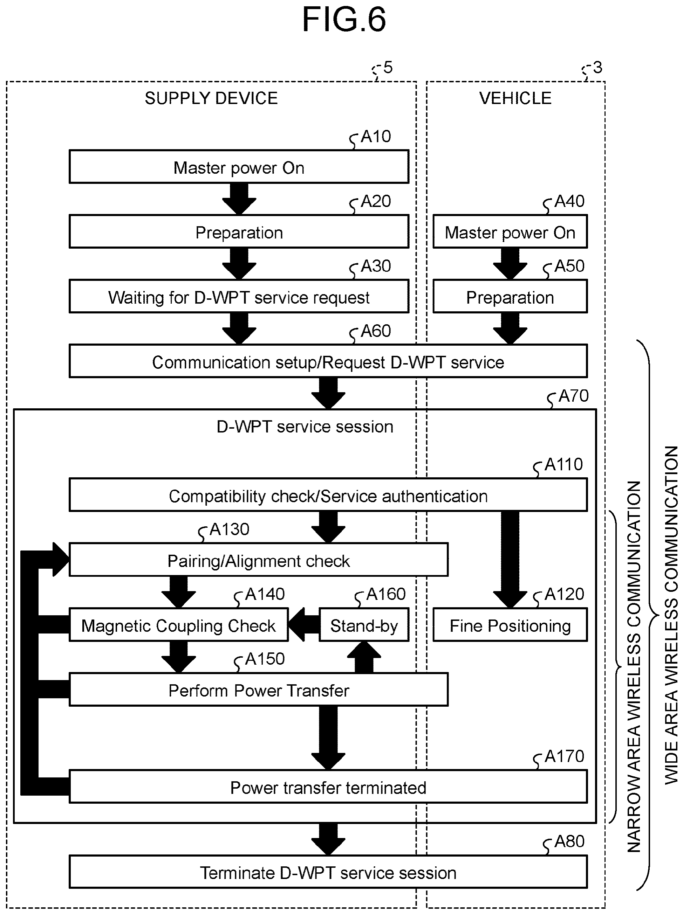

Next, a power transfer process (D-WPT process) will be described with reference to FIG. 6. The power transfer process is a process structured as a chain of multiple activities and derived from states and corresponding transitions.

FIG. 6 is a diagram illustrating the power transfer process. FIG. 6 illustrates basic activities for describing the power transfer process. Thick arrows in FIG. 6 are transition lines. A state of the wireless power transfer system 1 in the power transfer process is indicated by activities configuring the power transfer process.

The activities configuring the power transfer process include a power transfer service session (D-WPT service session A70) that is an activity in a stage of performing power transfer, an activity in a stage before performing the power transfer, and an activity in a stage after performing the power transfer. Furthermore, each activity can be described by dividing the subject of operation according to the presence or absence of communication between the supply device 5 and the vehicle 3. The activity is divided into a state of only the supply device 5 without communication, a state of only the vehicle 3 without communication, and a state of both the supply device 5 and the vehicle 3 with communication.

As illustrated in FIG. 6, the activities include a master power on A10, a preparation A20, a waiting for D-WPT service request A30 from the vehicle 3, a master power on A40, a preparation A50, a communication setup, a request D-WPT service A60, a D-WPT service session A70, and a terminate D-WPT service session A80.

The preparation A20 is a preparation state of the supply device 5. In the preparation A20, the supply device 5 activates the circuit and confirms safety without communicating with the vehicle 3. When the state of the master power on A10 is achieved, the supply device 5 transitions to the state of the preparation A20. Then, when the supply device 5 activates the circuit and safety is confirmed in the preparation A20, the state transitions to the waiting for D-WPT service request A30 from the vehicle 3. On the other hand, when there is a problem in the supply device 5, the supply device 5 notifies the vehicle 3 of information indicating that the wireless power transfer system 1 cannot be used (unavailability notification) using the wide area wireless communication. The first communication device 120 sends the unavailability notification to the vehicle 3.

The preparation A50 is a preparation state of the vehicle 3. In the preparation A50, the vehicle 3 activates the circuit and confirms safety without communicating with the supply device 5. When the state of the master power on A40 is achieved, the state the vehicle 3 transitions to the preparation A50. Then, in the preparation A50, when the vehicle 3 activates the circuit and safety is confirmed, the state transitions to the communication setup/request D-WPT service A60. On the other hand, when there is a problem in the vehicle 3, the vehicle 3 does not start the wide area wireless communication and does not perform a subsequent sequence in the D-WPT process.

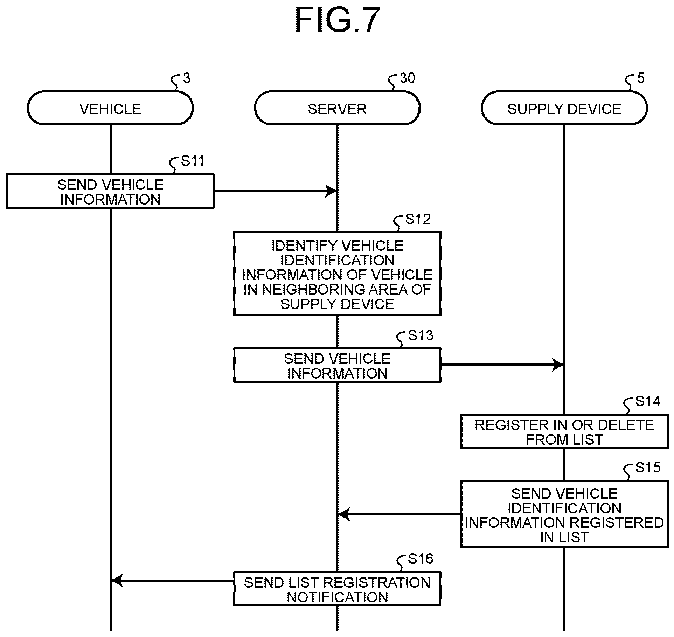

The vehicle ECU 330 starts the communication setup/request D-WPT service A60. In the communication setup/request D-WPT service A60, the vehicle ECU 330 starts the wide area wireless communication. First, when the vehicle 3 transitions from the preparation A50 to the communication setup/request D-WPT service A60, the third communication device 340 sends a request signal for the D-WPT service. The third communication device 340 performs wireless communication with the first communication device 120 corresponding to the D-WPT lane in which the vehicle 3 is scheduled to enter or has entered. The first communication device 120 to be communicated is selected based on a relative positional relationship between the current position of the vehicle 3 and the position of the D-WPT lane. On the supply device 5 side, when the first communication device 120 receives the request signal of the D-WPT service in a state of the waiting for D-WPT service request A30 from the vehicle 3, the state transitions to the communication setup/request D-WPT service A60. Various pieces of information of the wide area wireless communication and the P2PS communication are linked by using the vehicle identification information. A process sequence of the communication setup/request D-WPT service A60 is illustrated in FIG. 7.

FIG. 7 is a sequence diagram illustrating a case where communication using the wide area wireless communication is performed between the vehicle and the supply device. The vehicle 3 sends the vehicle information to the server 30 (step S11). In step S11, the third communication device 340 of the vehicle 3 sends the vehicle information to the server 30. The vehicle information includes the vehicle identification information, various parameters of the power receiver 20, current position information of the vehicle 3, and required power. The vehicle ECU 330 calculates the required power based on the state of charge (SOC) of the battery 320. In step S11, the vehicle ECU 330 causes the third communication device 340 to send the vehicle information at every predetermined time. The predetermined time is set according to a distance from the current position of the vehicle 3 to a start point of the WPT lane. The shorter the distance from the vehicle 3 to the start point of the WPT lane, the shorter the interval of the predetermined time.

When receiving the vehicle information from the vehicle 3, the server 30 identifies the vehicle identification information of the vehicle 3 located in a neighboring area of the supply device 5 based on the current position information of the vehicle 3 included in the vehicle information (step S12). In step S12, the server 30 identifies the vehicle 3 located in a predetermined neighboring area from the supply device 5 based on the current position information of the vehicle 3 and the position information of the supply device 5. For example, the neighboring area is set to an area within 500 meters.

When the vehicle identification information of the vehicle 3 is identified, the server 30 sends the vehicle information to the supply device 5 (step S13). In step S13, a transmission device of the server 30 sends the vehicle information to the supply device 5.

When the supply device 5 receives the vehicle information from the server 30, the supply device 5 registers or deletes the vehicle identification information in or from an identification information list (step S14). In step S14, the power transmission ECU 110 registers or deletes the vehicle identification information in the identification information list such that the vehicle identification information associated with the vehicle information is registered in the identification information list without excess or deficiency.

After registering or deleting the vehicle identification information in or from the identification information list, the supply device 5 sends the vehicle identification information registered in the identification information list to the server 30 (step S15). In step S15, the first communication device 120 of the supply device 5 sends the vehicle identification information to the server 30.

When the server 30 receives the vehicle identification information from the supply device 5, the server 30 sends a list registration notification to the vehicle 3 corresponding to the vehicle identification information registered in the identification information list (step S16). In step S16, the communication device of the server 30 sends the list registration notification to the vehicle 3. The list registration notification is a notification indicating that the vehicle identification information is registered in the identification information list, and includes the identification information of the supply device 5 and the position information of the supply device 5.

In this way, when the vehicle 3 starts the wide area wireless communication and both the supply device 5 and the vehicle 3 are in the state of the communication setup/request D-WPT service A60, the communication setup by the wide area wireless communication is successful. With the successful communication setup, the state transitions to the D-WPT service session A70.

Returning to FIG. 6. In the D-WPT service session A70, power is transferred from the transmission-side resonance circuit 240 of the supply device 5 to the reception-side resonance circuit 410 of the vehicle 3 in a non-contact manner in a state where a communication connection is established between the supply device 5 and the vehicle 3. The D-WPT service session A70 starts with the successful communication setup and ends upon termination of the communication. In the state of the D-WPT service session A70, when the communication ends, the state transitions to the terminate D-WPT service session A80.

In the terminate D-WPT service session A80, the vehicle 3 terminates the wide area wireless communication with the supply device 5. The vehicle 3 and the supply device 5 can receive a trigger for terminating the D-WPT service session A70. Then, the vehicle ECU 330 prevents the D-WPT from being started for the secondary device 22 and the vehicle 3 until the third communication device 340 receives the next notification (D-WPT service request signal).

The activity of the D-WPT service session A70 will be detailed below.

The D-WPT service session A70 includes a compatibility check/service authentication A110, a fine positioning A120, a pairing /alignment check A130, a magnetic coupling check A140, a perform power transfer A150, a stand-by A160, and a power transfer terminated A170.

The compatibility check/service authentication A110 will be described. After the communication setup is successful, the vehicle ECU 330 and the power transmission ECU 110 confirm that the primary device 13 and the secondary device 22 are compatible. The compatibility check is performed on the supply device 5 side based on information associated with the vehicle identification information acquired through communication. Check items include a minimum ground level of the secondary device 22, a shape type of the secondary device 410, circuit topology of the secondary device 22, a self-resonance frequency of the secondary device 22, and the number of secondary coils 21.

In the compatibility check/service authentication A110, the vehicle 3 first sends compatibility information of the power receiver 20 from the third communication device 340 to the supply device 5. The first communication device 120 of the supply device 5 receives the compatibility information of the power receiver 20 from the vehicle 3. Then, the first communication device 120 of the supply device 5 sends compatibility information of the power transmitter 10 to the vehicle 3. The third communication device 340 of the vehicle 3 receives the compatibility information of the power transmitter 10 from the supply device 5.

Elements of the compatibility information sent by the vehicle 3 to the supply device 5 include the vehicle identification information, WPT power classes, an air gap class, WPT operating frequencies, WPT frequency adjustment, a WPT type, WPT circuit topology, a fine positioning method, a pairing method, an alignment method, and information on the presence or absence of a power adjustment function.

Elements of the compatibility information sent by the supply device 5 to the vehicle 3 include supply device identification information, a WPT power class, a gap class, a WPT driving frequency, WPT frequency adjustment, a WPT type, a WPT circuit topology, a fine positioning method, a pairing method, an alignment method, and information on the presence or absence of a power adjustment function.

Each element name will be described in detail. Each element of the compatibility information sent from the vehicle 3 to the supply device 5 will be described, and the description of the compatibility information sent from the supply device 5 to the vehicle 3 overlapping with the compatibility information sent from the vehicle 3 to the supply device 5 will be omitted.

The gap class is information indicating a gap class that the secondary device 22 can receive. The WPT power class is information indicating a power class that the secondary device 22 can receive. The WPT driving frequency is information indicating a frequency of power received by the secondary device 22. The WPT frequency adjustment is information indicating whether to adjust the driving frequency. The WPT type is information indicating a shape type of the secondary device 22, and indicates a coil shape of the secondary coil 21. Examples of the WTP type include round and solenoid. The WPT circuit topology is information indicating a connection structure between the secondary coil 21 and the resonance capacitor. The WTP circuit topology includes series and parallel. The fine positioning method is information indicating how to position when performing alignment. The pairing method is a method in which the vehicle 3 performs pairing for identifying the supply device 5. The alignment method indicates a method of relatively confirming positions of the secondary device 22 and the primary device 13 before starting the power transfer.

The fine positioning A120 will be described. The vehicle 3 performs the fine positioning A120 in a vehicle lateral direction prior to or in parallel with the activity of the pairing /alignment check A130. When the vehicle ECU 330 determines that the vehicle 3 approaches or enters an area where the supply device 5 is installed (WPT lane), the vehicle ECU 330 starts the fine positioning A120 in the vehicle lateral direction.

The vehicle ECU 330 guides the vehicle 3 to align the primary device 13 and the secondary device 22 within a range that establishes sufficient magnetic coupling for wireless power transfer.

The fine positioning A120 is basically performed manually or automatically on the vehicle 3 side. The fine positioning A120 can cooperate with an automated driving assistance system (ADAS).

The activity of the fine positioning A120 continues until the vehicle 3 leaves the D-WPT charging site or the state changes to termination-of-communication, and the activity can be performed based on the positioning information sent from the supply device 5 to the vehicle 3 via the wide area wireless communication. The termination-of-communication is the terminate D-WPT service session A80.

The pairing/alignment check A130 will be described. Here, pairing and alignment check will be described separately.

Pairing will be described. A P2PS interface that performs the narrow area wireless communication ensures that the primary device 13 and the secondary device 22 are uniquely paired. A process of the pairing state is described below.

First, the vehicle ECU 330 recognizes that the vehicle 3 has approached or entered the D-WPT lane. For example, the vehicle ECU 330 has map information including the D-WPT lane, and compares the map information with the position information of the own vehicle obtained by the GPS receiver 360 to recognize approach or entry with a linear distance or the like. The vehicle 3 sends to the server 30 which D-WPT lane the vehicle 3 has approached via the wide area wireless communication. In other words, the third communication device 340 notifies a cloud of a signal indicating that the vehicle 3 has approached one of the D-WPT lanes. Further, when the vehicle ECU 330 recognizes the approach or entry of the vehicle 3 to the D-WPT lane, the fourth communication device 350 starts sending a modulated signal at certain intervals for pairing between the primary device 13 and the secondary device 22.

In addition, the supply device 5 may recognize that the vehicle 3 has approached or entered the D-WPT lane using information acquired from the server 30 via the wide area wireless communication. The server 30 allocates the vehicle identification information of the vehicle 3 approaching each D-WPT lane to the supply device 5 corresponding to an applicable lane. Since the supply device 5 only needs to refer to the vehicle identification information of the number of vehicles narrowed by the server 30, an authentication process can be performed in a short time. When the supply device 5 recognizes that the vehicle 3 is approaching the D-WPT lane, the second communication device 130 enters the stand-by mode. In the stand-by mode, the second communication device 130 waits for receiving a modulated signal from the fourth communication device 350 of the vehicle 3. The modulated signal includes the vehicle identification information.

When the second communication device 130 receives the modulated signal from the vehicle 3, the supply device 5 compares the vehicle identification information received via the narrow area wireless communication with the vehicle identification information in the identification information list obtained as a result of the wide area wireless communication with the plurality of vehicles 3 heading for the D-WPT lane. By this comparison, the supply device 5 identifies the vehicle 3.

When recognizing that the vehicle 3 is outside the D-WPT lane, the vehicle ECU 330 stops sending the modulated signal from the fourth communication device 350. The vehicle ECU 330 can determine whether the vehicle has passed through the D-WPT lane based on the map information and the position information of the own vehicle.

When determining that the vehicle 3 is not traveling on the D-WPT lane or when determining that the vehicle 3 is not approaching the D-WPT lane, the supply device 5 stops waiting for the modulated signal from the fourth communication device 350.

Pairing is performed on the primary device 13 until the vehicle 3 exits the D-WPT charging site or the state changes to the termination-of-communication. Once the pairing is completed, the state transitions to the alignment check.

The alignment check will be described. The alignment check is intended to confirm that a lateral distance between the primary device 13 and the secondary device 22 is within an acceptable range. The alignment check is performed by using the narrow area wireless communication (P2PS).

The alignment check is continuously executed based on the P2PS until the vehicle 3 leaves the D-WPT charging site or the state changes to the termination-of-communication. The result of the alignment check can be sent from the first communication device 120 to the third communication device 340 via the wide area wireless communication.

The magnetic coupling check A140 will be described. In the magnetic coupling check A140, the supply device 5 checks the magnetic coupling state and checks that the secondary device 22 is located within an acceptable range. When the magnetic coupling check A140 ends, the state transitions to the perform power transfer A150.

The perform power transfer A150 will be described. In this state, the supply device 5 performs power transfer to the power receiver 20. The power transmitter 10 and the power receiver 20 need to have capability of controlling the transfer power (transmission power and reception power) for the usefulness of MF-D-WPT and the protection of the power receiver 20 and the battery 320. A larger power transfer helps to extend a travel distance without static wireless charging and conductive charging of the power receiver 20. However, a capacity of the battery 320 varies depending on a vehicle type of the vehicle 3, and a driving power demand may suddenly fluctuate. Examples of this sudden fluctuation include a sudden regenerative brake. When the regenerative brake is applied while the vehicle is traveling on the D-WPT lane, the regenerative brake is prioritized. Thus, in addition to the regenerative power, the power received from the power receiver 20 is supplied to the battery 320. In this case, it is necessary to adjust the transfer power by the power receiver 20 in order to protect the battery 320 from overcharge.

In this state, communication is not newly started between the supply device 5 and the power receiver 20 although power needs to be controlled. This is because communication may impair response and accuracy in the power control due to its instability and latency. Therefore, the supply device 5 and the power receiver 20 perform power transfer and control thereof based on known information up to this state.

The supply device 5 increases the transfer power of the magnetic coupling check in response to the power demand sent from the third communication device 340 in advance using the wide area wireless communication. The supply device 5 keeps the current and voltage fluctuation within the range and attempts to maximize the power transferred during the transition.

The power receiver 20 basically receives the transfer power from the power transmitter 10 without any control. However, the power receiver 20 starts control when the transfer power exceeds or is about to exceed the limit, such as the rated power of the battery 320 that varies according to the charge state or the driving power demand of the vehicle 3. In addition, the power control in the vehicle ECU 330 is also required to respond to malfunction in the wide area wireless communication. This malfunction leads to a contradiction between a power control target in the primary device 13 and a request from the third communication device 340, and a sudden failure of the power receiver 20 and the battery 320 during power transfer. The power receiver 20 controls the power transferred under a power demand rate notified by the first communication device 120.

The power demand is determined based on compatibility check information such as WPT circuit topology, geometry, ground clearance, and electromagnetic compatibility (EMC) of the vehicle 3 and the primary device 13. The magnetic field varies depending on these specifications, and it is necessary to transfer power within a range satisfying the EMC.

The power control in the power transmission ECU 110 and the power receiver 20 may interfere with each other. In particular, there is a possibility of interference when the supply device 5 tries to realize a power demand larger than the latest power limit in the power receiver 20 via the wide area wireless communication. An example of this is rapid regenerative control with a relatively small battery 320 in the vehicle 3. It is desirable, if possible, that the supply device 5 can detect a mismatch between a power source control target and a limit and adjust the power transfer in order to eliminate the mismatch.

For example, when the power transfer is interrupted for a short period while the secondary device 22 is still on the primary device 13, such as when a foreign object on the primary device 13 is detected by the foreign object detector 140 or when magnetic coupling is reduced due to misalignment of the secondary device 22, the state transitions to the stand-by A160. When the foreign object detector is provided in the vehicle 3, the foreign object may be detected on the vehicle 3 side.

When the secondary device 22 passes through the primary device 13, the state transitions to the power transfer terminated A170. In this case, since the magnetic coupling between the two devices is weakened, power transferred will be reduced. Since the supply device 5 can detect that the magnetic coupling is weakened by monitoring the transfer power, the supply device 5 basically determines transition to the power transfer terminated A170, and then starts to lower the voltage to stop the power transfer.

The stand-by A160 will be described. In this state, the power transfer is interrupted for a short time for some reason, and when both the vehicle 3 and the supply device 5 are ready for the D-WPT, the state returns to the perform power transfer A150. When there is a possibility of interruption in the power transfer, the state will be the stand-by A160.

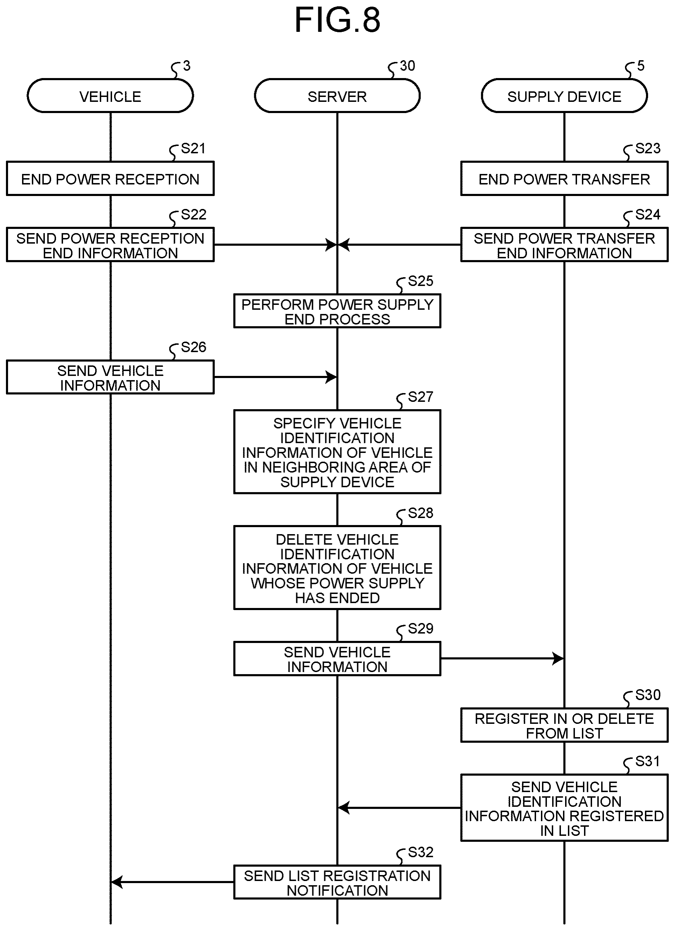

The power transfer terminated A170 will be described. In this state, the supply device 5 reduces the power transferred to zero, and holds or uploads power transfer result data such as total transfer power, a power transfer efficiency, and a failure history. Each piece of data is tagged with the vehicle identification information. Finally, the supply device 5 deletes the vehicle identification information of the vehicle 3 that has passed through the D-WPT lane. Accordingly, the supply device 5 can prepare for pairing and power transfer to be performed on another vehicle thereafter. A process sequence of the power transfer terminated A170 is illustrated in FIG. 8.

FIG. 8 is a sequence diagram illustrating an operation after power supply from the supply device to the vehicle during traveling is terminated. When the power reception from the supply device 5 ends in the power receiver 20 of the vehicle 3 (step S21), the vehicle 3 sends power reception end information to the server 30 (step S22). In step S22, the power reception end information is sent from the third communication device 340 of the vehicle 3. The power reception end information includes, for example, the vehicle identification information of the vehicle 3, received power from the supply device 5, the power reception efficiency, and a failure detection result as information regarding power reception from the supply device 5.

When the process in step S21 is performed, the supply device 5 ends the power transfer to the vehicle 3 (step S23). The process in step S21 and the process in step S23 may or may not be performed simultaneously. When the process in step S23 is performed, the supply device 5 sends the power transfer end information to the server 30 (step S24). In step S24, the power transfer end information is sent from the first communication device 120 of the supply device 5.

When the power reception end information is received from the vehicle 3 and also the power transfer end information is received from the supply device 5, the server 30 performs a power supply end process to terminate the power supply from the supply device 5 to the vehicle 3 (step S25). In the power supply end process, a process of calculating a power supply amount from the supply device 5 to the vehicle 3 and a process of charging a user of the vehicle 3 based on the calculated power supply amount are performed based on the power reception end information and the power transfer end information.

Further, the vehicle 3 sends the vehicle information to the server 30 regardless of the power supply end process (step S26). In step S26, the vehicle information is sent from the third communication device 340 of the vehicle 3.

When the vehicle information is received from the vehicle 3 after the power supply end process is performed, the server 30 specifies the vehicle identification information of the vehicle 3 located in the neighboring area of each supply device 5 based on the vehicle information (step S27).

Then, when the power supply end process for a certain vehicle 3 has already been performed in a certain supply device 5, the server 30 deletes the vehicle identification information of the vehicle 3 for which the power supply end process has already been performed from the vehicle identification information of the vehicle 3 in the neighboring area of the certain supply device 5 identified in the process in step S27 (step S28).

Thereafter, the server 30 sends, to each of the supply devices 5, the vehicle information associated with the vehicle identification information that has not been deleted in the process in step S28 among the vehicle identification information of the vehicle 3 identified as being located in the neighboring area of each of the supply devices 5 (step S29).

When the supply device 5 receives the vehicle information from the server 30 after the vehicle information is sent to each supply device 5 in the process in step S29, the supply device 5 registers or deletes the vehicle identification information in the identification information list (step S30). A process in step S30 is similar to the process in step S14 in FIG. 7. Thereafter, the supply device 5 sends the vehicle identification information registered in the identification information list to the server 30 (step S31). A process in step S31 is similar to the process in step S15 in FIG. 7.

When the server 30 receives the vehicle identification information from the supply device 5, the server 30 sends a list registration notification to the vehicle 3 corresponding to the vehicle identification information registered in the identification information list (step S32). A process in step S32 is similar to the process in step S16 in FIG. 7.

As a result, when the process illustrated in FIG. 8 is performed, the vehicle identification information is registered in the identification information list for the vehicle 3 located in the neighboring area of each of the supply devices 5 and for which the power supply from the supply device 5 has not ended and a request for deleting the vehicle identification information has not been made. When the vehicle identification information of the vehicle 3 is registered in the identification information list of any one of the supply devices 2, the vehicle 3 receives the list registration notification. Therefore, the vehicle ECU 330 can determine that the own vehicle is registered in any one of the supply devices 5 by receiving the list registration notification. When the vehicle 3 goes out of the neighboring area of the supply device 5, the vehicle identification information of the vehicle 3 is deleted from the identification information list of the supply device 5.

Returning to FIG. 6. In addition, in the power transfer terminated A170, the power receiver 20 does not need to do anything to reduce the transfer power to zero. The P2PS interface is kept active when the vehicle 3 is on the D-WPT lane and the state of the power receiver 20 automatically transitions to pairing for power transfer from the next primary device 13. As with the transition line indicated in FIG. 6, the state transitions from the power transfer terminated A170 to the pairing/alignment check A130. As illustrated in FIG. 6, when a predetermined transition condition is satisfied, it is possible to transition from the magnetic coupling check A140 to the pairing/alignment check A130 and transition from the perform power transfer A150 to the pairing /alignment check A130. The pairing may be individually performed on each of the plurality of primary coils 11, or the plurality of primary coils 11 may be bundled and the pairing may be performed at a representative point.

Then, when there is no D-WPT request from the vehicle ECU 330 or when a series of states from the communication setup/request D-WPT service A60 to the power transfer terminated A170 is prohibited, the D-WPT service session A70 transitions to the terminate D-WPT service session A80 and stops the wide area wireless communication between the first communication device 120 and the third communication device 340. For example, the D-WPT is stopped when the state of charge in the battery 320 is too high or when the power receiver 20 is too hot due to continuous power transfer. An unnecessary D-WPT can be disabled simply by deactivating the P2PS interface. However, by stopping the wide area wireless communication, the power transmission ECU 110 can release the memory occupied by the vehicle 3 by terminating the established wide area wireless communication without requiring the D-WPT.

In addition, the D-WPT service session A70 is not limited to transition according to the transition line illustrated in FIG. 6. When a condition that the power transfer process stays in the D-WPT service session A70 is satisfied at terminating the pairing/alignment check A130 or later activity in the D-WPT service session A70, the state does not transition to the terminate D-WPT service session A80 and transitions to the compatibility check/service authentication A110. For example, when a predetermined transition condition is satisfied in the state of the magnetic coupling check A140, the state can transition to the compatibility check/service authentication A110.

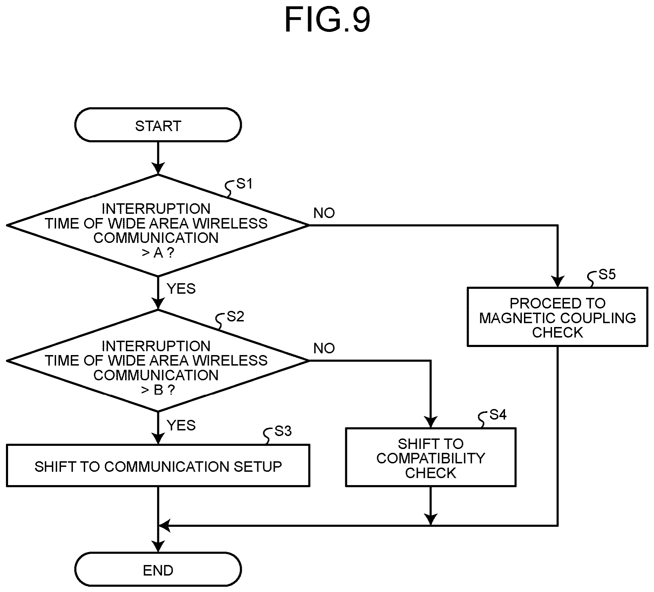

FIG. 9 is a flowchart illustrating a process executed by the control device. The supply facility 2 as the control device determines whether an interruption time in which the wide area wireless communication is interrupted is larger than a first threshold A (step S1).

When the supply facility 2 determines that the interruption time is greater than the first threshold A (step S1: Yes), the supply facility 2 determines whether the interruption time is greater than a second threshold B (step S2).

When the supply facility 2 determines that the interruption time is greater than the second threshold B (step S2: Yes), the supply facility 2 shifts to the communication setup for starting the wide area wireless communication (communication setup/request D-WPT service A60 in FIG. 6) (step S3).

In step S2, when the supply facility 2 determines that the interruption time is less than or equal to the second threshold B (step S2: No), the supply facility 2 shifts to the first process of the power transfer service (D-WPT service session A70 in FIG. 6), i.e., a compatibility check (compatibility check/service authentication A110 in FIG. 6) to confirm that the primary device 13 and the secondary device 22 are compatible (step S4).

In step S1, when the supply facility 2 determines that the interruption time is equal to or less than the first threshold A (step S1: No), the supply facility 2 proceeds to a magnetic coupling check (magnetic coupling check A140 in FIG. 6) for confirming a magnetic coupling state between the primary device 13 and the secondary device 22 via a short interruption of power transfer (stand-by A160 in FIG. 6) (step S5).

According to the control device described above, as the interruption time of the wide area wireless communication is longer, the safety is ensured by returning to an earlier process to resume the process. As the interruption time of the wide area wireless communication is shorter, the process can be promptly resumed from a later process.

The supply facility 2 may set the first threshold A and the second threshold B according to a vehicle speed of the vehicle 3. By setting the first threshold A and the second threshold B according to the vehicle speed, safety can be reliably ensured even when the vehicle speed is fast, and the process can be promptly resumed when the vehicle speed is slow.

In addition, FIG. 9 illustrates an example of shifting to the communication setup/request D-WPT service A60, the compatibility check/service authentication A110, or the magnetic coupling check A140, respectively, but the present invention is not limited thereto. The control device can resume the process from any process according to the first threshold A and the second threshold B.

Furthermore, the control device may be the vehicle 3 or the server 30. In other words, the vehicle 3 or the server 30 may determine whether the interruption time is greater than the first threshold A or the second threshold B. Similarly, the vehicle 3 or the server 30 may determine from which process to resume according to the communication interruption time.

Further effects and modifications can be easily derived by those skilled in the art. Broader aspects of the present disclosure are not limited to the specific details and the representative embodiment presented and described above. Accordingly, various changes may be made without departing from the spirit or scope of the general disclosed concept as defined by the appended claims and their equivalents.

### Reference Signs List

- 1: WIRELESS POWER TRANSFER SYSTEM
- 2: SUPPLY FACILITY
- 3: VEHICLE
- 4: ROAD
- 5: SUPPLY DEVICE
- 6: AC POWER SOURCE
- 10: POWER TRANSMITTER
- 11: PRIMARY COIL
- 20: POWER RECEIVER
- 21: SECONDARY COIL

## Claims

1. A control device in a wireless power transfer system that transfers power in a non-contact manner, using narrow area wireless communication and wide area wireless communication, from a primary device included in a supply facility to a secondary device included in a traveling vehicle, the control device comprising a processor configured to:
shift to a magnetic coupling check to confirm a magnetic coupling state between the primary device and the secondary device when an interruption time in which the wide area wireless communication is interrupted is equal to or less than a first threshold, and
shift to a compatibility check to confirm that the primary device and the secondary device are compatible when the interruption time is greater than the first threshold.

2. The control device according to claim 1, wherein the processor shifts to a communication setup for starting the wide area wireless communication when the interruption time is greater than a second threshold that is greater than the first threshold.

3. The control device according to claim 2, wherein the processor sets the first threshold and the second threshold according to a vehicle speed of the vehicle.
